# EUROPEAN PATENT SPECIFICATION

(11) **EP 0 409 232 B1**
(45) Date of publication and mention of the grant of the patent: **20.04.1994**
(21) Application number: 90113858.6
(22) Date of filing: 19.07.1990
(51) Int. Cl.: B60R 11/02

(54) **Car-mounted video displaying apparatus**
Im Fahrzeug angebrachtes Sichtbildgerät
Ecran vidéo monté dans une voiture

(30) Priority: 20.07.1989 JP 85427/89
(43) Date of publication of application: 23.01.1991
(73) Proprietor: KABUSHIKI KAISHA TOSHIBA, Kawasaki-shi, Kanagawa-ken 210 (JP)
(72) Inventor: Kawata, Norio, Saitama-ken 369-11 (JP); Takuma, Masaaki, Fukaya-shi, Saitama-ken 366 (JP)
(74) Representative: Lehn, Werner, Dipl.-Ing.

(56) References cited:
- EP-A- 0 098 090
- EP-A- 0 338 405
- PATENT ABSTRACTS OF JAPAN vol. 12, no. 272 (M-724)(3119) 28 July 1988,& JP-A-63 53144 (MATSUSHITA ELECTRIC IND CO LTD) 03 July 1988,

## Description

### Background of the Invention:

This invention relates to a car-mounted video displaying apparatus provided within a car to provide the driver or the like with various kinds of information.

### Description of the Related Arts:

Recently, such car as particularly a passenger car is provided within it with a display for improving the inhabitability and driving operatability.

Such display has it mostly as one of the objects to provide the driver of the car with various kinds of information and is preferrably embedded in such front surface facing the driver's seat as the console box surface or dashboard surface or within this dashboard.

However, generally in such parts are arranged such audio apparatus as a radio or stereo set and such various apparatus as a ventilator grill of an air conditioner. Therefore, in case the above mentioned display is formed of a CRT (cathode ray tube), it will be difficult to secure the space.

Therefore, for example, in the publication of JP-A-61-282 139 is disclosed an art wherein a slider slidable toward the near side (toward the driver) is provided within the above mentioned console box and a liquid crystal display is housed within the slider. This liquid crystal display is formed to be of dimensions within the DIN (Deutsche Industrie Norm), is connected on the near side (driver's seat side) with the above mentioned slider at the near side end so as to be rotatable through a hinge and is provided on the upper surface with a liquid crystal display part.

As required, the slider is pulled out, the liquid crystal display is raised on the front side (the side opposite the driver's seat side) and the angle is fixed by a bendable stay provided on the back surface of the above mentioned liquid display.

However, according to this art, in the case of raising the liquid crystal display, first of all, the slider must be pulled out to be above the length of the liquid crystal display and the operation is complicated.

Also, for example, in the publication of JP-A-63-283 374 is disclosed an art wherein the slider is connected at the near side end with the above mentioned liquid crystal display at the front side end through a hinge.

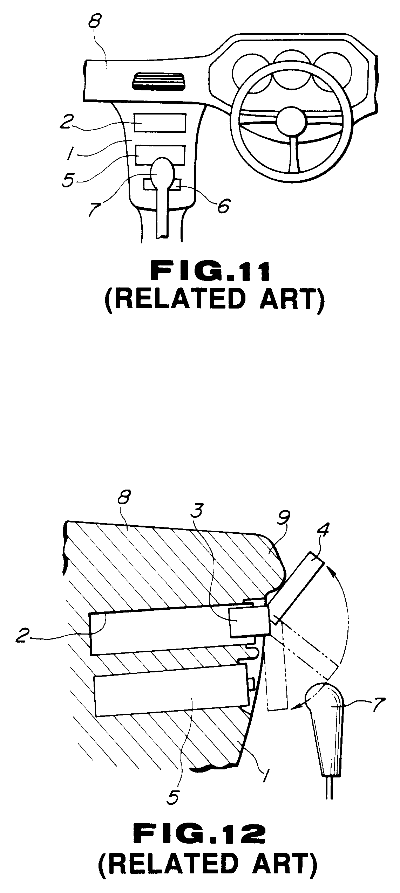

That is to say, as shown in Figs. 11 and 12, a console box 1 is provided with a housing part 2 which is provided slidably with a slider 3 formed to be comparatively short. At the near side end of this slider 3 is rotatably provided a liquid crystal display 4 through a hinge so that, as required, when the above mentioned slider 3 is slid to the near side, the liquid crystal display 4 may be pulled out and rotated through the hinge.

However, in this prior art, in case the liquid crystal display 4 is rotated downward to be opposed to the driver's seat as shown by the two-point chain line in Fig. 12, such other devices arranged in the above mentioned console box 1 as the audio apparatus 5 will be hidden by the back surface of the liquid crystal display 4 so as to be inoperative or the ash tray 6 will be likely to become difficult to use. Further, in case the car on which this art is used is a small car, the liquid crystal display 4 will contact the change lever 7 to be likely to become unable to rotate as shown by the two-point chain line in Fig. 12.

In order to cope with it, the above mentioned liquid crystal display 4 may be considered to be formed to rotate to the upper side. However, generally the dashboard 8 is provided with an overhanging part 9 to intercept light and therefore, as shown by the solid line in Fig. 12, the above mentioned liquid crystal display 4 may contact this overhanging part 9 to be likely to become unable to be well rotated. On the other hand, if the above mentioned slider 3 fitting position is moved downward, a sufficient rotation will be possible but the perceptibility of the liquid crystal will be unavoidably deteriorated.

A further prior art that is of interest is JP-A-63-53 144 that discloses a housing to be fitted in a vehicle, said housing having a television set therein with its screen extending in a horizontal plane. Within the housing is a sliding transverse bar that is coupled by a pantograph to the rear of the housing, the pantograph being urged by spring means to expand to a setting in which the transverse bar is displaced towards the front end of the housing. The television set is pivotably coupled to the transverse bar such that it can be swung upwardly or downwardly about a horizontal axis once the pantograph has pushed said bar to a setting in which said pivotal connection extends sufficiently out of said housing for such pivotal movement of the television set ot take place. When the television set is pushed fully back into the housing a latch member engages a lock pin on the sliding transverse bar to hold the bar in its retracted setting. Release of this latch member is effected by pushing against the exposed end of the television set.

### Summary of the Invention:

The present invention has been made to solve the forementioned problems and has as its object to provide a car-mounted video displaying apparatus wherein a display can be not only housed within a small space but can be also pulled out by a simple operation in a direction opposed to the driver or the like without any interfence to the operatability and perceptibility of other apparatus.

The present invention is as defined in the accompanying claims.

### Brief Description of the Drawings:

Fig. 1 is a perspective view of a car-mounted video displaying apparatus relating to an embodiment of the present invention.

Fig. 2 is a bottom view showing the apparatus of Fig. 1 as housed.

Fig. 3 is a side view of Fig. 2. Fig. 4 is an elevation of Fig. 2.

Fig. 5 is a bottom view showing a display of the apparatus of

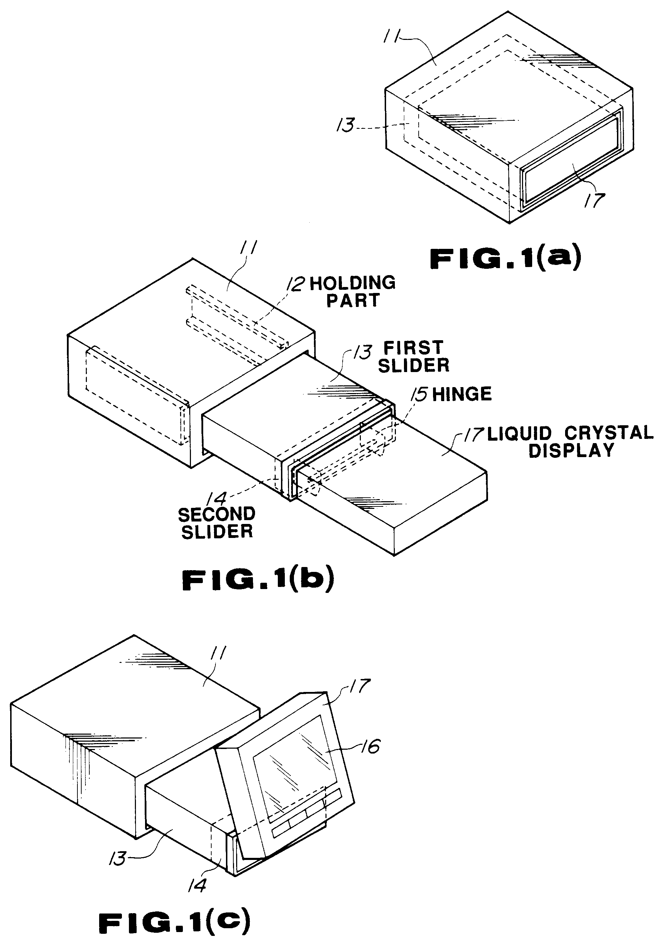

Fig. 1 as pulled out.

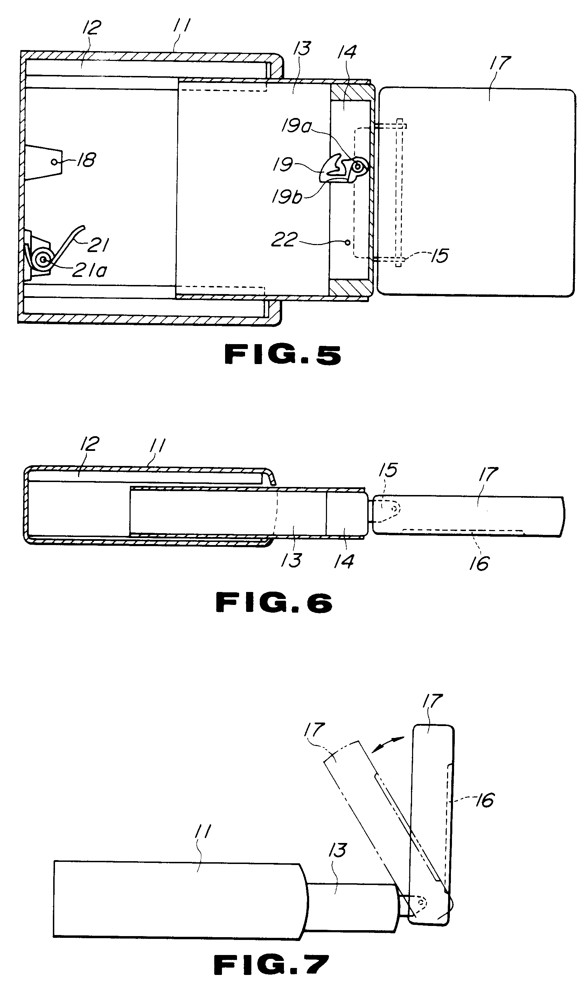

Fig. 6 is a side view of Fig. 5.

Fig. 7 is a side view showing the display of the apparatus of Fig. 1 as rotated.

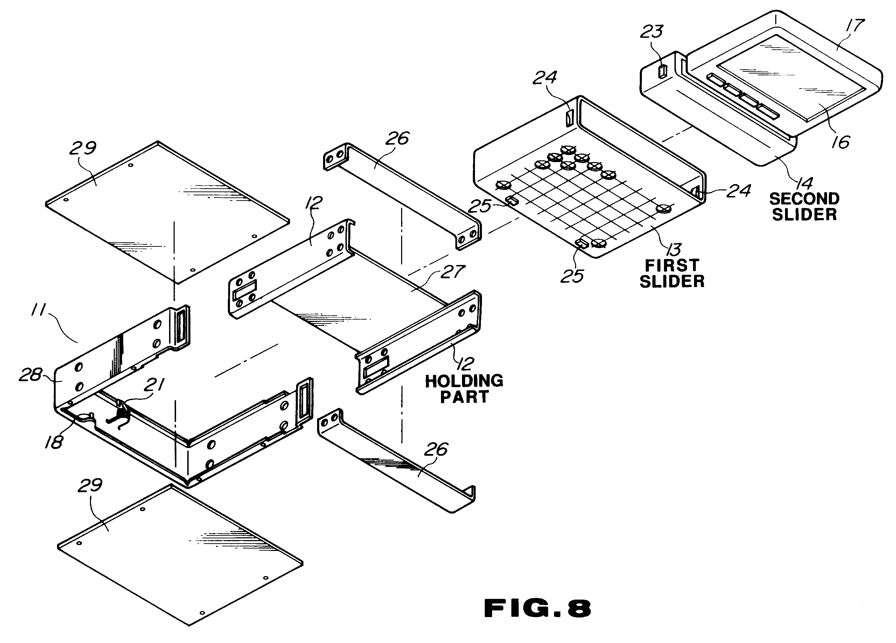

Fig. 8 is a perspective view of the car-mounted video displaying apparatus of Fig. 1 as disassembled.

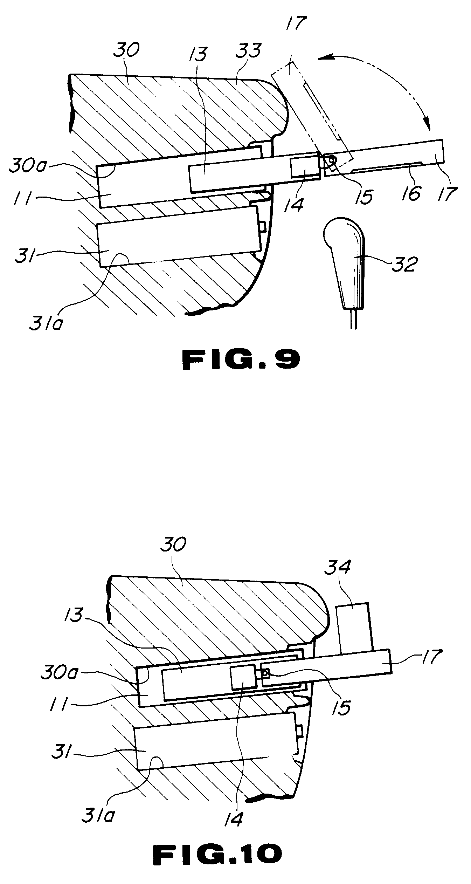

Fig. 9 is a side view showing the operation of the apparatus of Fig. 1 as fitted to a car.

Fig. 10 is an explanatory view showing an accompanying effect of the apparatus of Fig. 1 as fitted to a car.

Fig. 11 is an elevation of a dashboard relating to a prior art.

Fig. 12 is a side view showing the operation of the liquid crystal display of Fig. 11.

### Detailed Description of the Preferred Embodiment:

Fig. 1 is a perspective view of a car-mounted video displaying apparatus showing an embodiment of the present invention. In Fig. 1, the reference numeral 11 represents a cover. A holding part 12 formed of a pair of channel-like members is fixed on the right and left inside this cover 11 as shown in Fig. (b) and is provided slidably with a first slider 13 formed like a rectangular pipe.

A slidable second slider 14 is housed within this first slider 13. A display 17 having a liquid crystal displaying part 16 on the lower surface is provided rotatably as shown in Fig. (c) through a hinge 15 arranged on the driver's seat side in the sliding direction of the second slider 14.

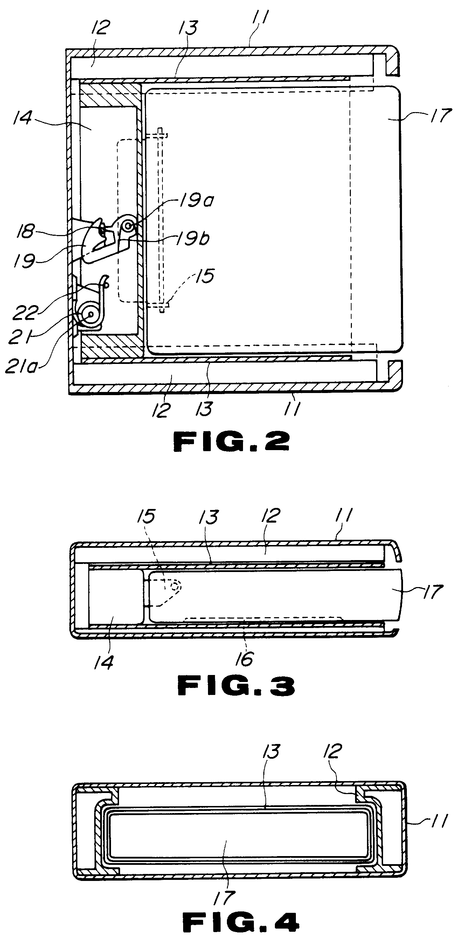

As shown in the bottom views in Figs. 2 and 5, a bar-like engaging pin 18 is provided on the inside surface of the inner part of the above mentioned cover 11 and, on the other hand, a heart cam 19 engaging with this engaging pin 18 is provided on the front side of the above mentioned second slider 14. The heart cam 19 is rotatably fitted at one end to a pin 19a provided on the second slider 14 with the rotation angle regulated and is given an energizing force in one direction (in the drawing, in the clockwise direction) by a spring 19b. The heart cam 19 is formed at the other end to be substantially heart-like, is curved arcuately in the front side direction in the outside form and is formed to be concave in the front side direction in the inside form. And then, when the engaging pin 18 contacts the heart cam 19 in the arcuate part of its contour, the cam in the arcuate part will be rotated counter-clockwise and, when the tip of the arcuate part of the cam rotates to the position of the pin 18 and the pin 18 enters the concave part on the inside, the cam will be rotated clockwise by the energizing force of the spring 19b and the pin 18 will be engaged with the cam in the concave part. On the contrary, in releasing this engagement, when the liquid crystal display 17 is pressed from the right in the drawing to push the second slider 14 leftward, the cam in the concave part and the pin 18 will be disengaged with each other, the heart cam 19 will be rotated clockwise by the energizing force of the spring 19b, the pin 18 will further enter the concave part inside the heart cam 19 and will enter an disengaging guide groove not illustrated provided there and thereby the heart cam 19 and pin 18 will be perfectly disengaged with each other. Thus, when the heart cam 19 is engaged with the above mentioned engaging pin 18, the above mentioned second slider 14 and first slider 13 will be disengageably fixed to the cover 11. Also, a resilient body 21 is arranged on the inside surface of the inner part of the above mentioned cover 11 and is formed of a coil spring fitted to the inside surface of the cover 11. The spring is fixed at one end in contact with the inside surface of the cover 11 and is opened at the other end so as to be able to generate an energizing force to the driver's seat side in the sliding direction. In case the above mentioned second slider 14 is fixed to the holding part 12, a bar-like pressing pin 22 provided at the front side end of this second slider 14 will be pressed by the above mentioned resilient body 21 so that the second slider 14 may be always energized to the driver's seat side. By the way, it is needless to say that the member to contact the resilient body 21 need not always be a bar-like pin but may be plate-like.

As shown in the side view of Fig. 3, the length of the above mentioned holding part 12 is so set that, in case the above mentioned second slider 14 is fixed to the holding part 12, the driver's seat side end surface of the display 17 may substantially coincide with the driver's seat side end part of the cover 11. When the above mentioned display 17 is pressed on the driver's seat side end surface, the above mentioned heart cam 19 and engaging pin 18 will be disengaged with each other and, when the pressing pin 22 is pressed by the resilient body 21, as shown in the bottom view of Fig. 5 and the side view of Fig. 6, the above mentioned first slider 13 and second slider 14 will be projected to the driver's seat side out of the end surface of the cover 11.

Also, as shown in the side view of Fig. 7 showing the display as rotated, when the above mentioned hinge 15 is projected out of the slider13, the display 17 will become bendable with respect to the second slider 14 through this hinge 15 and the liquid crystal displaying part 16 provided on the lower surface of the above mentioned display 17 will be able to be directed to the driver's seat side.

Fig. 8 shows a perspective view of a car-mounted video displaying apparatus as disassembled. As shown in Fig. 8, a stopper 23 formed like a projection is provided on each side surface of the above mentioned slider 14 and contacts an engaging part 24 provided like a projection on each inside surface side of the driver's seat side of the above mentioned first slider 13 so that, when the display 17 is pulled out, the above mentioned second slider 14 will not be pulled out of the first slider 13 but both will remain engaged with each other. Further, by the stopper 23 and engaging part 24, the second slider 14 will be stopped in the position in which the hinge 15 projects out of the first slider 13. Also, stoppers 25 are provided on the front side lower surface of the above mentioned first slider 13 and contact reinforcing members 26 fixed above and below the above mentioned holding part 12 so that the above mentioned first slider 13 and holding part 12 may be kept engaged. The holding part 12 is formed of a pair of members opposed to each other and has a circuit substrate 27 fitted to the upper side. The cover 11 is formed of a channel-like frame 28 and a pair of lids 29 fitted to the upper and lower sides and has the engaging pin 18 and resilient body 21 fitted to the inside surface of the inner part of the frame 28.

As shown in the side view showing the operation in Fig. 9, the car-mounted video displaying apparatus having such formation as in the above is housed in a housing recess 30a formed to be of substantially the same shape as of the cover 11, for example, of a dashboard 30. The above mentioned housing recess 30a is provided in the upper part of the dashboard 30 and above another housing recess 31a in which such audio apparatus 31 as a radio set is housed and is inclined upward toward the driver's seat side so that, even in case the display 17 is pulled out, it may not contact a change lever 32.

In the case of pulling out the display 17, the end part of the display 17 exposed out of the driver's seat side end part of the holding part 12 within the cover 11 is pressed with a finger or the like to disengage the heart cam 19 provided in the second slider 14 and the engaging pin 18 fitted to the above mentioned cover 11 with each other. In this state, when the press by the finger or the like on the above mentioned display 17 is released, the first slider 13 holding the display 17 will be moved to the driver's seat side within the range of the energizing force of the resilient body 21.

Then, when the above mentioned display 17 is gripped at the driver's seat side end or the like and is pulled to the driver's seat side, stoppers 25 of the first slider 13 will contact the reinforcing members 26 to stop the above mentioned first slider 13.

In this state, when the display 17 is further pulled, the second slider 14 will be slid with respect to the above mentioned first slider 13, the hinge 15 provided on the driver's seat side of this second slider 14 will be projected to the driver's seat side out of the above mentioned first slider 13 and the stopper 23 will contact the engaging part 24 to stop the movement of the second slider 14.

Then, as the above mentioned display 17 can be rotated through the above mentioned hinge 15, as shown by the two-point chain line in Fig. 9, the display 17 will be rotated upward at the driver's seat side end so that the liquid crystal displaying part provided on the lower surface of the display 17 may be directed to the driver's seat side.

In this state, the above mentioned first slider 13 is slid to the front side and the above mentioned display 17 is moved until the back surface of the display 17 contacts the overhanging part 33 of the above mentioned dashboard 30. As a result, this display 17 will have on the back the overhanging part 33 on which nothing is arranged, will be prevented from making it difficulty to operate other devices arranged on the dashboard 30 and will minimize the space it occupies.

As shown in the side view of Fig. 10, when only the above mentioned display 17 or only the first slider 13 holding this display 17 is pulled out, the upper surface of the display 17 or first slider 13 will be able to be used as a mounting stand on which any small articles (for example, cigarettes) 34 may be mounted.

On the other hand, in the case of housing the display 17, the display 17 is gripped at the upper end and is rotated with the hinge 15 as a center so as to be substantially aligned with the first slider 13. Then, when this display 17 is pressed at the driver's seat side end to the front side, the above mentioned first slider 13 will slide in the holding part 12 and will contact the inside surface of the inner part of the cover 11 so as to stop. Then, when the above mentioned display 17 is further pressed, the second slider 14 will slide within the above mentioned first slider 13 to the front side and the pressing pin 22 provided on this second slider 14 will contact the resilient body 21 arranged in the above mentioned cover 11. When the display 17 is further pressed against the energizing force of this resilient body 21, the heart cam 19 of the above mentioned second slider 14 will engage with the engaging pin 18 of the cover 11 so as to fix the display 17 and cover 11 with each other.

As explained above, the car-mounted video displaying apparatus according to the present invention has advantages that not only the display housing space can be saved but also the display can be pulled out by a simple operation to be opposed to the driver or the like and will not deteriorate the operatability and perceptibility of other apparatus. There is also an accompanying effect that, as the display is housed with the liquid crystal displaying part directed below, when the display is not used, it will be able to be used as a stand on which any articles may be placed.

## Claims

1. A car-mounted video displaying apparatus wherein a liquid crystal display (17) is housed by means of sliders so as to be able to be put into and out of a housing part (11) provided within a car, said apparatus comprising:
a holding part (12) fixed within said housing part (11);
a first slider (13) slidably provided in said holding part (12);
a second slider (14) slidable along said first slider (13);
said liquid crystal display (17) being rotatably mounted through a hinge (15) provided at the tip of said second slider (14) and being rotatable about said hinge when said tip of said second slider (14) projects out of said housing part (11), said liquid crystal display (17) being rotatable at the driver's seat side so that a liquid crystal displaying part may be directed to the driver's seat side;
engaging means (18, 19) for releasably holding said liquid crystal display (17), second slider (14) and first slider (13) within said holding part (12);
energizing means (21) for energizing said second slider (14), liquid crystal display (17) and first slider (13) in the sliding direction while engaged by said engaging means (18, 19) and moving them in the sliding direction towards the dirver's seat when said engaging means (18, 19) is released; and
said first slider (13) being formed like a rectangular pipe within which the second slider (14) and the liquid crystal display (17) can slide.

2. A car-mounted video displaying apparatus according to Claim 1 characterized in that a first stopper means for keeping said holding part (12) and first slider (13) engaged with each other when said first slider (13) slides is provided between said holding part (12) and first slider (13).

3. A car-mounted video displaying apparatus according to Claim 1 characterized in that a second stopper means for keeping said first and second sliders (13), (14) engaged with each other, when said first and second sliders (13), (14) slide, is provided between said first slider (13) and second slider (14).

4. A car-mounted video displaying apparatus according to Claim 1 characterized in that said engaging means comprises:
an engaging pin (18) provided in the inner part of a housing part in which said holding part (12) is provided; and
a heart cam (19) provided on the front side of said second slider (14) to disengageably engage said engaging pin (18).

5. A car-mounted video displaying apparatus according to Claim 1 characterized in that said energizing means comprises:
a resilient body (21) provided in the inner part of a housing part in which said holding part (12) is provided; and
a member (22) provided on the front side of said second slider (14) to press said resilient body (21).

6. A car-mounted video displaying apparatus according to Claim 1 wherein said second slider (14) has a recess opening towards the rear of said housing part (11), said recess being such that when the liquid crystal display (17) is completely put in said housing part (11) said engaging means (18) and said energizing means (22) extend into said recess in the second slider (14).

## Patentansprüche

1. In einem Kraftfahrzeug angebrachtes Sichtanzeigegerät, in dem eine Flüssigkeitskristallanzeige (17) durch Mittel von Schlitten untergebracht ist, um es zu ermöglichen, daß es in oder aus einem in einem Kraftfahrzeug geschaffenen Gehäuseteil (11) gebracht werden kann, mit:
- einem Halteteil (12), das in dem Gehäuseteil (11) fest angebracht ist;
- einem ersten Schlitten (13), der gleitbar in dem Halteteil (12) geschaffen ist;
- einem zweiten Schlitten (14), der entlang des ersten Schlittens (13) gleiten kann;
- der Flüssigkeitskristallanzeige (17), die drehbar durch ein Gelenk (15) an der Spitze des zweiten Schlittens (14) befestigt ist und um dieses Gelenk drehbar ist, wenn die Spitze des zweiten Schlittens (14) aus dem Gehäuseteil (11) hervorkragt, die Flüssigkeitskristallanzeige (17) an der Fahrersitzseite drehbar ist, so daß ein Flüssigkeitskristallanzeigeteil zu der Fahrersitzseite gerichtet werden kann;
- Eingriffsmitteln (18, 19) zum lösbaren Halten der Flüssigkeitskristallanzeige (17), des zweiten Schlittens (14) und ersten Schlittens (13) innerhalb des Halteteils (12);
- Erregungsmitteln (21) zum Erregen des zweiten Schlittens (14), der Flüssigkeitskristallanzeige (17) und des ersten Schlittens (13) in die Gleitrichtung, während sie durch die Eingriffsmittel (18, 19) im eingegriffenen Zustand sind und zum Bewegen dieser in die Gleitrichtung gegen die Fahrersitzseite hin, wenn die Eingriffsmittel (18, 19) gelöst sind, und
- dem ersten Schlitten (13), der wie eine rechteckige Röhre geformt ist, in der der zweite Schlitten (14) und die Flüssigkeitskristallanzeige (17) gleiten können.

2. In einem Kraftfahrzeug angebrachtes Sichtanzeigegerät nach Anspruch 1, dadurch gekennzeichnet, daß ein erstes Anschlagmittel zum Beibehalten des Eingriffs des Halteteils (12) und des ersten Schlittens (13) miteinander zwischen dem Halteteil (12) und dem ersten Schlitten (13) geschaffen ist, wenn der erste Schlitten (13) gleitet.

3. In einem Kraftfahrzeug angbrachtes Sichtanzeigegerät nach Anspruch 1, dadurch gekennzeichnet, daß ein zweites Anschlagmittel zum Beibehalten des Eingriffs des ersten und zweiten Schlittens (13, 14) miteinander zwischen dem ersten Schlitten (13) und dem zweiten Schlitten (14) geschaffen ist, wenn der erste und der zweite Schlitten (13, 14) gleiten, .

4. In einem Kraftfahrzeug angebrachtes Sichtanzeigegerät nach Anspruch 1, dadurch gekennzeichnet, daß die Eingriffsmittel umfassen:
- einen Eingriffsstift (18), der in dem inneren Teil des Gehäuseteils geschaffen ist, in dem der Halteteil (12) geschaffen ist; und
- ein Schulterstück (19), das auf der vorderen Seite des zweiten Schlittens (14) geschaffen ist, um mit dem Eingriffsstift (18) lösbar einzugreifen.

5. In einem Kraftfahrzeug angebrachtes Sichtanzeigegerät nach Anspruch 1, dadurch gekennzeichnet, daß die Erregungsmittel umfassen:
- einen Federkörper (21), der in dem inneren Teil des Gehäuseteils geschaffen ist, in dem der Halteteil (12) geschaffen ist, und
- ein Glied (22), das auf der vorderen Seite des zweiten Schlittens (14) geschaffen ist, um den Federkörper (21) zu drücken.

6. In einem Kraftfahrzeug angebrachtes Sichtanzeigegerät nach Anspruch 1, bei dem der zweite Schlitten (14) eine Einschnittsöffnung gegen die Hinterseite des Gehäuseteils (11) hat, der Einschnitt derart ist, daß wenn die Flüssigkeitskristallanzeige (17) vollständig in dem Gehäuseteil (11) untergebracht ist, das Eingriffsmittel (18) und die Erregungsmittel (22) sich in den Einschnitt in dem zweiten Schlitten (14) erstrecken.

## Revendications

1. Ecran vidéo monté dans une voiture dans lequel un écran à cristaux liquides (17) est encastré au moyen de coulisseaux de façon à être positionné à l'intérieur et à l'extérieur d'une partie de protection (11) disposée à l'intérieur d'une voiture, ledit dispositif comprenant :
une partie de support (12) fixée à l'intérieur de ladite partie de protection (11) ;
un premier coulisseau (13) disposé de façon coulissable dans ladite partie de support (12) ;
un second coulisseau (14) le long dudit premier coulisseau (13) ;
ledit écran à cristaux liquides (17) étant monté en rotation autour d'une articulation (15) disposée à l'extrémité dudit second coulisseau (14) et étant tournable autour de ladite articulation lorsque ladite extrémité dudit second coulisseau (14) est projetée à l'extérieur de ladite partie de protection (11), ledit écran à cristaux liquides (17) étant tournable à côté du siège du conducteur de sorte qu'une partie d'affichage à cristaux liquides puisse être dirigée vers le côté du siège du conducteur ;
des moyens d'engagement (18, 19) pour maintenir de manière déblocable ledit écran à cristaux liquides (17), le second coulisseau (14) et le premier coulisseau (13) à l'intérieur de ladite partie de support (12) ;
un moyen d'action (21) pour actionner ledit second coulisseau (14), l'écran à cristaux liquides (17) et le premier coulisseau (13) dans la direction de coulissement tandis qu'ils sont engagés par ledit moyen d'engagement (18, 19) et qu'ils sont déplacés dans la direction de coulissement vers le siège du conducteur lorsque ledit moyen d'engagement (18, 19) est débloqué, et
ledit premier coulisseau (13) étant formé comme une conduite rectangulaire à l'intérieur de laquelle le second coulisseau (14) et l'écran à cristaux liquides (17) peuvent coulisser.

2. Ecran vidéo monté dans une voiture selon la revendication 1, caractérisé en ce qu'un premier moyen d'arrêt pour maintenir ladite partie de support (12) et le premier coulisseau (13) engagés mutuellement l'un l'autre lorsque ledit premier coulisseau (13) coulisse, est disposé entre ladite partie de support (12) et le premier coulisseau (13).

3. Ecran vidéo monté dans une voiture selon la revendication 1, caractérisé en ce que un second moyen d'arrêt pour maintenir lesdits premier et second coulisseaux (13, 14) engagés mutuellement l'un l'autre, lorsque lesdits premier et second coulisseaux (13, 14) coulissent, est disposé entre ledit premier coulisseau (13) et le second coulisseau (14).

4. Ecran vidéo monté dans une voiture selon la revendication 1, caractérisé en ce que ledit moyen d'engagement comprend :
un ergot d'engagement (18) disposé dans la partie interne d'une partie de protection dans laquelle ladite partie de support (12) est disposée, et
une came interne (19) disposée sur le côté avant dudit second coulisseau (14) pour engager de manière désengageable ledit ergot d'engagement (18).

5. Ecran vidéo monté dans une voiture selon la revendication 1, caractérisé en ce que le moyen d'action comprend :
un corps élastique (21) disposé dans la partie interne d'une partie de protection dans laquelle ladite partie de support (12) est disposée, et
un élément (22) disposé sur le côté avant dudit second coulisseau (14) pour comprimer ledit corps élastique (21).

6. Ecran vidéo monté dans une voiture selon la revendication 1, dans lequel ledit second coulisseau (14) comporte un évidement s'ouvrant vers l'arrière de ladite partie de protection (11), ledit évidement étant tel que lorsque l'écran à cristaux liquides (17) est complètement encastré dans ladite partie de protection (11) ledit moyen d'engagement (18) et ledit moyen d'action (22) s'étendent dans ledit évidement dans le second coulisseau (14).
